(19) Europäisches Patentamt
European Patent Office
Office européen des brevets

(11) **EP 3 862 988 B1**

(12) **EUROPEAN PATENT SPECIFICATION**

(45) Date of publication and mention
of the grant of the patent:
**20.03.2024 Bulletin 2024/12**

(21) Application number: **19868653.7**

(22) Date of filing: **24.09.2019**

(51) International Patent Classification (IPC):
**G08G 1/00** *(2006.01)*     **E01F 9/512** *(2016.01)*
**E01F 11/00** *(2006.01)*     **G05D 1/02** *(2020.01)*

(52) Cooperative Patent Classification (CPC):
**E01F 9/30; B60W 30/12; B60W 60/001;**
**E01F 9/512; G05D 1/0261; G08G 1/042;**
**G08G 1/167; B60W 2420/50; B60W 2552/53**

(86) International application number:
**PCT/JP2019/037366**

(87) International publication number:
**WO 2020/071182 (09.04.2020 Gazette 2020/15)**

(54) **MAGNETIC MARKER SYSTEM**

MAGNETISCHES MARKIERUNGSSYSTEM

SYSTÈME DE MARQUEUR MAGNÉTIQUE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **04.10.2018 JP 2018188906**

(43) Date of publication of application:
**11.08.2021 Bulletin 2021/32**

(73) Proprietor: **Aichi Steel Corporation**
**Tokai-shi, Aichi 476-8666 (JP)**

(72) Inventors:
• **YAMAMOTO, Michiharu**
**Tokai-shi, Aichi 476-8666 (JP)**
• **NAGAO, Tomohiko**
**Tokai-shi, Aichi 476-8666 (JP)**
• **AOYAMA, Hitoshi**
**Tokai-shi, Aichi 476-8666 (JP)**

(74) Representative: **Viering, Jentschura & Partner**
**mbB**
**Patent- und Rechtsanwälte**
**Am Brauhaus 8**
**01099 Dresden (DE)**

(56) References cited:
**WO-A1-2017/187881     WO-A1-2017/187881**
**WO-A1-2017/209112     DE-A1- 10 019 779**
**JP-A- H06 265 615     JP-A- H06 265 615**
**JP-A- 2002 260 154     US-A- 3 609 678**

**Description**

TECHNICAL FIELD

The present invention relates to a magnetic marker system including magnetic markers laid on or in a road so that they can be detected on a vehicle side traveling on the road.

BACKGROUND ART

Conventionally, vehicular magnetic marker detection systems using magnetic markers laid on a road have been known (for example, refer to Patent Literature 1) . These magnetic marker detection systems have an object of providing various driving assists, such as automatic steering control or lane departure warning using the magnetic markers, by taking vehicles including magnetic sensors as targets.
DE 100 19 779 A1 discloses a sensor for a test vehicle which is movable along a predetermined track provided with a series of marker magnets. The sensor has an antenna device from which a signal is generated when passing a marker magnet.
JP 2002 260154 A discloses a magnetic origin marker for detecting information such as road linear data installed in the width direction of the road, a magnetic position marker for detecting the transverse position of the vehicle installed in the extending direction of the road, and an identifying means of the magnetic origin marker and the magnetic position marker provided on a vehicle side detector.
US 3 609 678 A discloses a magnet installation on a roadway for providing control information to vehicles traveling on the roadway comprising at least one preformed polymer-based magnet that is installed in a lane of travel of the roadway and that comprises a tough organic polymeric matrix that has a thickness of at least about 25 mils and particles of magnetic material.
WO 2017/187881 A1 discloses a driving assistance system that comprises: magnetic markers that are magnetically detectable and that are laid on a travel path so as to be capable of providing code information to the vehicle side; a vehicle configured so as to be capable of magnetically detecting the magnetic markers and reading the code information; and a base station configured so as to receive code information from the vehicle that has read the code information and respond with corresponding information.

CITATION LIST

PATENT LITERATURE

Patent Literature 1: Japanese Unexamined Patent Application Publication No. 2005-202478

SUMMARY OF INVENTION

TECHNICAL PROBLEM

However, the above-described conventional vehicular magnetic marker detection systems have the following problem. That is, since a magnetic sensor on a vehicle side is attached at a high position on the order of 100 mm to 250 mm from a road surface, magnetic force of a magnetic marker is required to be intensified to some extent. On the other hand, if the magnetic force of the magnetic marker is intensified, a metallic object such as a nail or bolt falling on the road surface is attracted to possibly cause a trouble such as a blowout of a vehicle's tire.
The present invention was made in view of the above-described conventional problem, and is to provide a magnetic marker system for allowing a magnetic marker to be detected with high reliability on a vehicle side while magnetic force of the magnetic marker is reduced.

SOLUTION TO PROBLEM

The present invention provides a magnetic marker system according to claim 1. Further embodiments of the present invention are disclosed in the dependent claims.

Advantageous Effects of Invention

In the magnetic marker system of the present invention, the magnetic markers are laid so that the orientations of the magnetic poles are alternately reversed along the road. Furthermore, the magnetic markers in this magnetic marker system are arranged so that the magnetic fields of the magnetic markers adjacent to each other as being spaced with the gap along the road interfere with each other.

In the magnetic marker system of the present invention, a magnetic field acting on the vehicle side is intensified by using interference between the magnetic fields of the magnetic markers adjacent to each other. If the magnetic field acting on the vehicle side can be intensified by using the interference between the magnetic fields, strength of the magnetic force on a surface of a magnetic marker can be relatively reduced with respect to strength of the magnetic field required on the vehicle side for detection of the magnetic marker.

As described above, the magnetic marker system of the present invention is a system having an excellent characteristic capable of detecting the magnetic marker on the vehicle side with high reliability while reducing the magnetic force of the magnetic marker.

BRIEF DESCRIPTION OF DRAWINGS

FIG. 1 is a descriptive diagram depicting a state in which a vehicle detects a magnetic marker in a first embodiment.
FIG. 2 is a descriptive diagram depicting a magnetic marker system in the first embodiment.
FIG. 3 is a diagram depicting the magnetic marker in the first embodiment.
FIG. 4 is a graph depicting a magnetic field distribution of the magnetic marker in a vertical direction in the first embodiment.
FIG. 5 is a block diagram depicting an electrical configuration of a magnetic sensor in the first embodiment.
FIG. 6 is a descriptive diagram of changes in sensor output at time of passing over the magnetic marker in the first embodiment.
FIG. 7 is a descriptive diagram of an arrangement pitch and gap G between magnetic markers in the first embodiment.
FIG. 8 is a descriptive diagram of laying specifications for magnetic markers in the first embodiment.
FIG. 9 is a graph depicting a relation between an attachment height of the magnetic sensor and sensor output (p-p) in the first embodiment.
FIG. 10a is a graph depicting changes in sensor output in a forwarding direction of the vehicle when the arrangement pitch between the magnetic markers=100 cm in the first embodiment.
FIG. 10b is a graph depicting changes in sensor output in the forwarding direction of the vehicle when the arrangement pitch between the magnetic markers=50 cm in the first embodiment.
FIG. 10c is a graph depicting changes in sensor output in the forwarding direction of the vehicle when the arrangement pitch between the magnetic markers=30 cm in the first embodiment.
FIG. 10d is a graph depicting changes in sensor output in the forwarding direction of the vehicle when the arrangement pitch between the magnetic markers=20 cm in the first embodiment.
FIG. 10e is a graph depicting changes in sensor output in the forwarding direction of the vehicle when the arrangement pitch between the magnetic markers=10 cm in the first embodiment.
FIG. 11 is a graph depicting a relation between the arrangement pitch between magnetic markers and sensor output (p-p) in the first embodiment.
FIG. 12a is a descriptive diagram of magnetic fields formed by a single magnetic marker in the first embodiment.
FIG. 12b is a descriptive diagram of magnetic fields formed by magnetic markers when the arrangement pitch=10 cm in the first embodiment.
FIG. 12c is a descriptive diagram of magnetic fields formed by magnetic markers when the arrangement pitch=20 cm in the first embodiment.
FIG. 13a is a diagram depicting a data series configuring a sensor output waveform in a second embodiment.
FIG. 13b is a diagram depicting a data series configuring a sine waveform in the second embodiment.
FIG. 14a is a graph depicting a relation between the arrangement pitch between magnetic markers and a coefficient of correlation in the second embodiment.
FIG. 14b is a descriptive diagram depicting sensor output (p-p) in a high correlation range in the second embodiment.

DESCRIPTION OF EMBODIMENTS

Embodiments of the present invention are specifically described by using the following embodiments.

(First Embodiment)

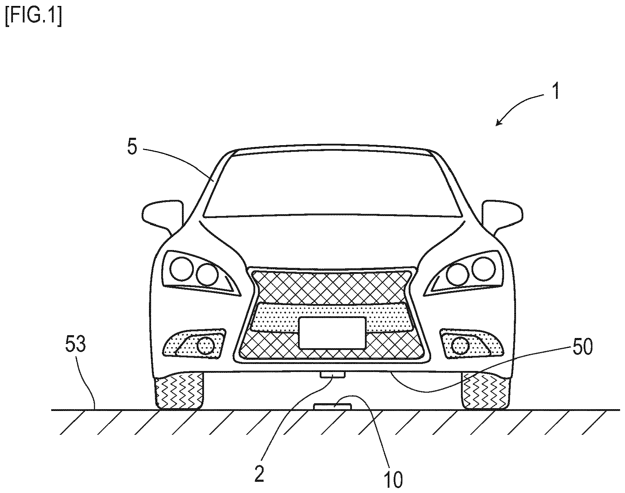

The present embodiment is an example of magnetic marker system 1 including magnetic markers 10 laid along a road so as to be detectable on a vehicle 5 side. Details of this are described by using FIG. 1 to FIG. 12.

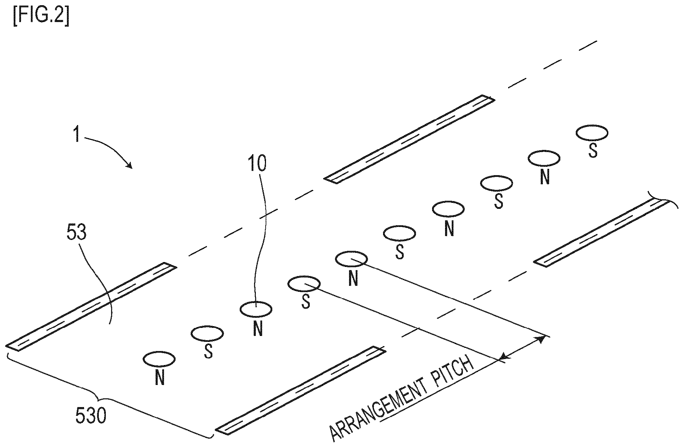

Magnetic markers 10 of FIG. 1 and FIG. 2 are laid, for example, along the center of lane 530 where vehicle 5 travels. Magnetic markers 10 laid on road surface 53 in this manner can be detected by magnetic sensor 2 attached, for example, to vehicle body floor 50 forming a bottom surface of vehicle 5. Detection signal of magnetic marker 10 by magnetic sensor 2 is inputted to, for example, an ECU or the like, not depicted, on the vehicle 5 side, and can be used for various controls on the vehicle 5 side, such as automatic steering control for lane keeping, driving assist control such as lane departure warning, and automatic traveling control.

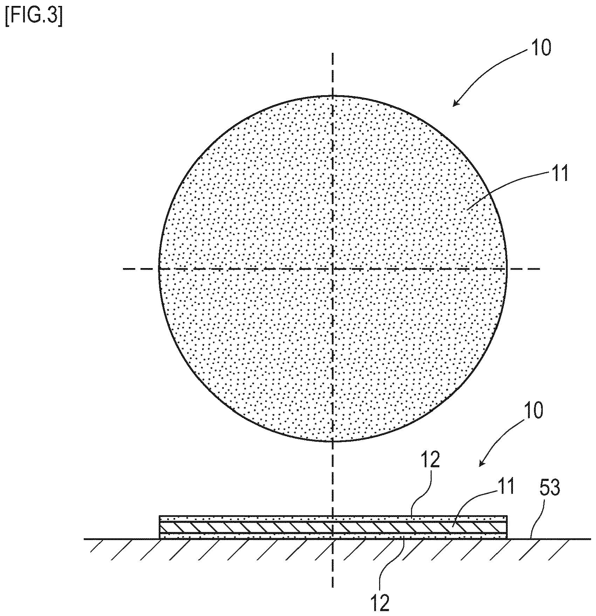

Magnetic marker 10 is, as depicted in FIG. 3, a flat, circular marker having a diameter of 100 mm and a maximum thickness of approximately 2.0 mm. Magnetic marker 10 includes a flat magnet sheet 11 having a diameter of 100 mm and a thickness of 1.0 mm. In magnetic marker 10, both front and back surface sides of magnet sheet 11 are each covered with resin mold 12 having a thickness of 0.5 mm. Magnet sheet 11 is a sheet, made of isotropic ferrite rubber magnet, obtained by molding a mixture of magnetic powder made of iron oxide and rubber. This magnet sheet 11 has a maximum energy product (BHmax) of 6.4 kJ/cubic meter.

In this magnetic marker 10, one surface of both front and back surfaces is an N-pole surface, and the other surface is an S-pole surface. This magnetic marker 10 does not have a distinction between the front and the back, and either one of a laying mode with the N pole serving as an upper surface and a laying mode with the S pole serving as the upper surface can be alternatively selected (refer to FIG. 2).

Installation of magnetic markers 10 on road surface 53 is performed by, for example, bonding and fixing with a bonding agent. Note that resin mold may be applied also onto an outer peripheral side surface of magnetic marker 10. Also, resin mold 12 on the upper surface side of magnet sheet 11 forming part of road surface 53 may be a resin mold reinforced with glass fiber.

Here, shape specifications and magnetic specifications of magnet sheet 11 included in magnetic marker 10 of the present embodiment are partially depicted in Table 1.

[Table 1]

| Magnet type | Ferrite rubber magnet |
|---|---|
| Outer diameter | $\phi$ 100 mm |
| Thickness | 1.0 mm (excluding resin mold) |
| Magnetic flux density Gs of the surface | 1 mT |

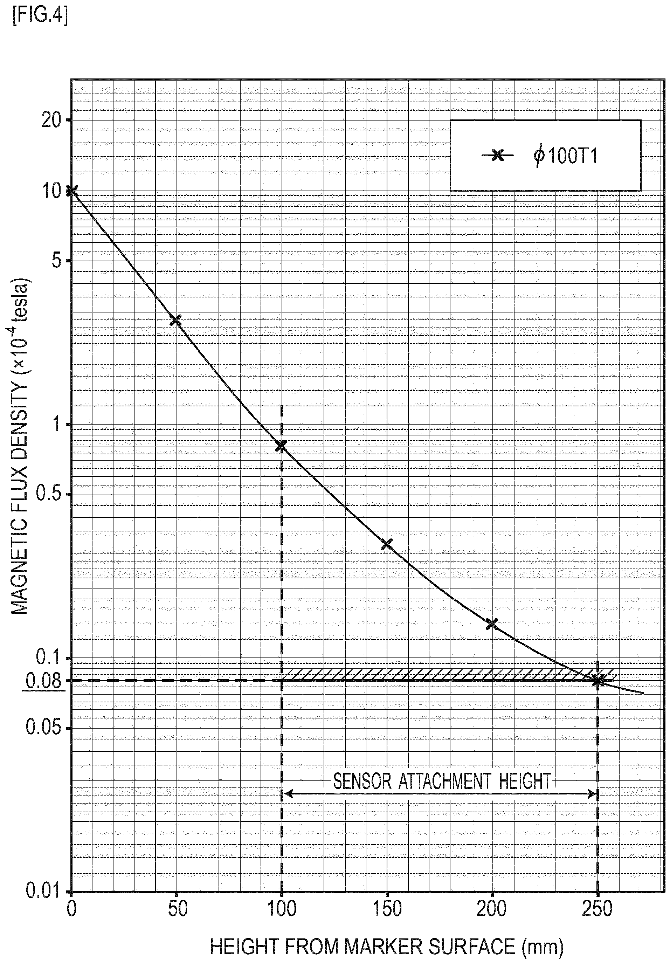

Magnetic field distribution with which magnetic marker 10 acts in a vertical direction is as in FIG. 4. The drawing is a semilogarithmic graph indicating simulation results by axisymmetric three-dimensional magneto-static analysis using a finite element method. Note that to perform this computer simulation, a simulation program whose simulation accuracy has been confirmed in advance by demonstrative experiments is used. Furthermore, as for part of data indicated in the drawing, values have been confirmed by demonstrative experiments.

FIG. 4 is a drawing in which the logarithmic scale for the magnetic flux density of magnetism acting in the vertical direction is set on a vertical axis and a height of magnetic marker 10 with reference to its surface in the vertical direction (height from the marker surface) is set on a horizontal axis. In the drawing, the magnetic flux density when the height from the marker surface=0 mm is "magnetic flux density Gs of the surface" in Table 1. In this magnetic marker 10, in a range of 100 mm to 250 mm assumed as an attachment height of magnetic sensor 2 (hereinafter referred to as a sensor height), the magnetic flux density equal to or higher than 8 microtesla is ensured.

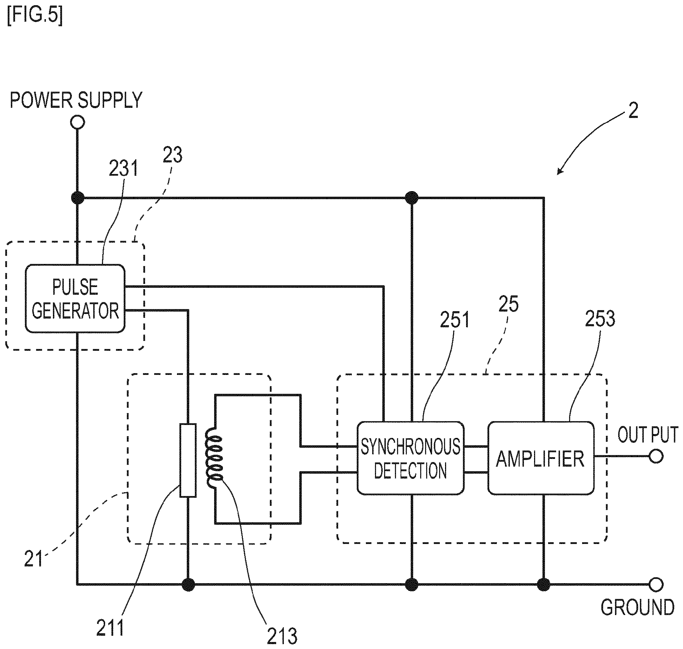

Magnetic sensor 2 is a MI (Magneto Impedance) sensor of one chip, with MI element 21 and a driving circuit integrated together, as depicted in a block diagram of FIG. 5. MI element 21 is an element including amorphous wire (one example of a magneto-sensitive body) 211 made of a CoFeSiB-based alloy and having almost zero magnetostriction and pickup coil 213 wound around this amorphous wire 211. Magnetic sensor 2 measures voltage generated in pickup coil 213 when a pulse current is applied to amorphous wire 211, thereby detecting magnetism acting on amorphous wire 211 as the magneto-sensitive body.

The driving circuit is configured to include pulse circuit 23 which supplies pulse current to amorphous wire 211 and signal processing circuit 25 which samples and outputs a voltage generated at pickup coil 213 at predetermined timing. Pulse circuit 23 is a circuit including pulse generator 231 which generates a pulse signal as a source of the pulse current. Signal processing circuit 25 is a circuit which picks up an induced voltage of pickup coil 213 via synchronous detection 251 which is opened and closed in conjunction with the pulse signal and amplifies the voltage by amplifier 253 with a predetermined amplification factor. A signal amplified by this signal processing circuit 25 is externally outputted as a sensor signal.

Specifications of this magnetic sensor 2 are partially depicted in Table 2.

[Table 2]

| Measurement range | ±0.6 mT |
|---|---|
| Magnetic flux resolution | 0.02 μT |
| Sampling frequency | 3 kHz |

Magnetic sensor 2 is a sensor with high sensitivity in which the measurement range of the magnetic flux density is ±0.6 millitesla and the magnetic flux resolution in the measurement range is 0.02 microtesla. This high sensitivity is achieved by MI element 21 using the MI effect in which the impedance of amorphous wire 211 sensitively changes in response to an external magnetic field. Here, as described above, magnetic marker 10 acts on a position with the height of 100 mm to 250 mm, which is an assumed range of the sensor height, with magnetism having at least the magnetic flux density of 8 microtesla (refer to FIG. 4). According to magnetic sensor 2 having the magnetic flux resolution of 0.02 microtesla (refer to FIG. 2), this magnetic marker 10 can be detected with high reliability.

Magnetic sensor 2 has sensitivity in a longitudinal direction of amorphous wire 211. In a configuration of the present embodiment, magnetic sensor 2 is vehicle-mounted so that the longitudinal direction of amorphous wire 211 goes along a longitudinal direction of vehicle 5. This magnetic sensor 2 has sensitivity in a forwarding direction of vehicle 5, and can measure a component of a magnetic field acting in this direction. Note that magnetic sensor 2 of the present embodiment is configured so that its output (hereinafter, sensor output) has a positive value when vehicle 5 approaches N-pole magnetic marker 10.

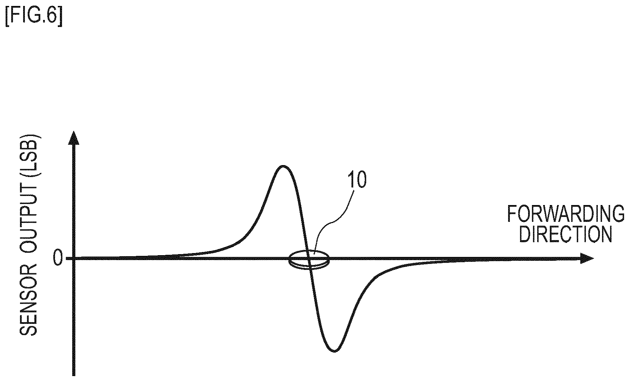

As for the component along the forwarding direction of vehicle 5 of the magnetic field acting on magnetic sensor 2, an acting direction is reversed between a position before magnetic marker 10 and a position after passing over magnetic marker 10. And, at the position directly above magnetic marker 10, the magnitude of the component along the forwarding direction of vehicle 5 of the magnetic field acting on magnetic sensor 2 becomes zero. For example, when vehicle 5 passes over N-pole magnetic marker 10, as in FIG. 6, the sensor output with the positive value gradually increases to become a maximum value, and is then changed to decrease before the position directly above magnetic marker 10 and gradually diminish. Then, after the sensor output becomes zero at the position directly above magnetic marker 10, as the vehicle goes away from magnetic marker 10, the sensor output with a negative value gradually increases to a negative side and becomes a minimum value. Then, as the vehicle further goes away from magnetic marker 10, the sensor output with the negative value becomes closer to zero. In this manner, the waveform of the sensor output when vehicle 5 passes over magnetic marker 10 (hereinafter, sensor output waveform) exhibits a zero-cross at the position directly above magnetic marker 10, and becomes a waveform with both positive and negative ridges forming a point-symmetric relation with respect to this zero-cross. Note in a graph of FIG. 6 that positions of vehicle 5 in the forwarding direction are defined on the horizontal axis and sensor outputs are defined on the vertical axis. A unit of sensor output in the drawing are minimum bit (LSB) when the sensor output is digitized. All units of sensor output or sensor output (p-p) in the drawings of the present embodiment are these minimum bits (LSB).

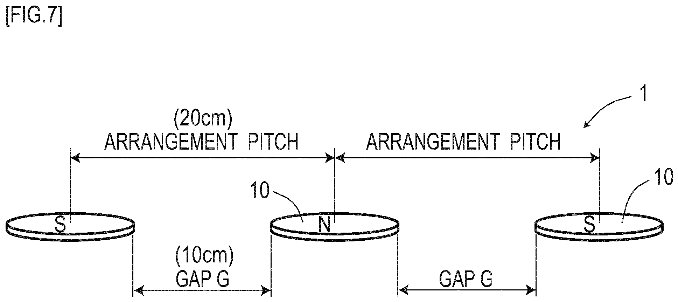

In magnetic marker system 1 of the present embodiment, as in FIG. 7, magnetic markers 10 are arranged at an arrangement pitch of 20 cm along the road. Since each magnetic marker 10 has the diameter of 100 mm (10 cm), a gap (gap) G between two magnetic markers 10 adjacent to each other along the road is 10 cm. Furthermore, in a configuration of the present embodiment, magnetic marker 10 with the N pole on its upper surface and magnetic marker 10 with the S pole on its upper surface are alternately arranged so that orientations of magnetic poles are alternately reversed along the road, and magnetic polarities of magnetic markers 10 are alternately switched. In the present embodiment, by setting a relatively narrow arrangement pitch between magnetic markers 10 and alternately switching the magnetic polarities of magnetic markers 10, intensity of the magnetic field (magnitude of magnetism) acting on magnetic sensor 2 is enhanced.

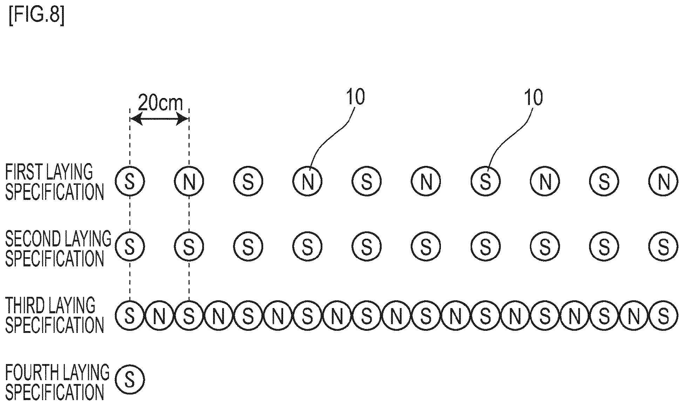

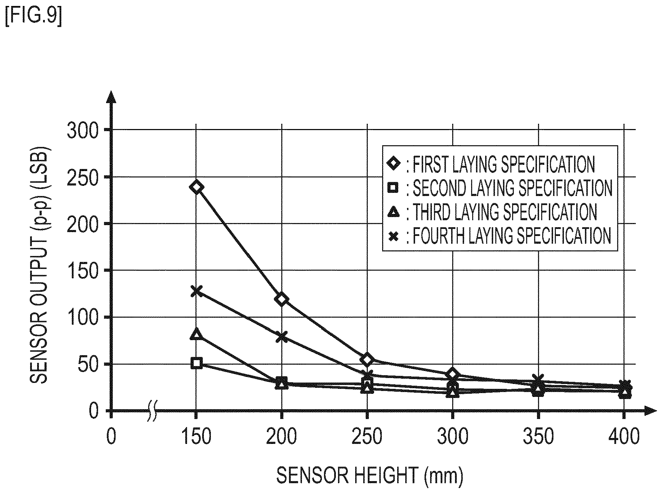

Next, described with reference to FIG. 8 and FIG. 9 is that the intensity of the magnetic field acting on magnetic sensor 2 can be improved by laying mode of magnetic markers 10 as described above. FIG. 8 depicts four types of laying specification. FIG. 9 exemplarily depicts a relation between the sensor height (horizontal axis) and the sensor output (p-p) (vertical axis) for each laying specification. Note that the sensor output (p-p) indicates peak-to-peak (amplitude) of the sensor output waveform.

Four types of laying specification in FIG. 8 are as follows.

(First Laying Specification) Laying specification of the present embodiment in which magnetic markers 10 are arranged every 20 cm along the road so that the magnetic polarities of magnetic markers 10 are alternately switched. As described above, since each magnetic marker 10 has the diameter of 10 cm, length of gap G between two magnetic markers 10 adjacent to each other along the road is 10 cm (refer to FIG. 7).

(Second Laying Specification) Laying specification in which S-pole magnetic markers 10 are arranged every 20 cm along the road without switching of the magnetic polarities of magnetic markers 10.

(Third Laying Specification) Laying specification in which magnetic markers 10 are arranged every 10 cm along the road so that the magnetic polarities of magnetic markers 10 are alternately switched. Since each magnetic marker 10 has the diameter of 10 cm, the state becomes such that two magnetic markers 10 adjacent to each other along the road are circumscribed without the gap.

(Fourth Laying Specification) Laying specification in which magnetic markers 10 adjacent to each other are arranged so as to be sufficiently separated and each magnetic marker 10 is magnetically isolated.

According to FIG. 9, the sensor output (p-p) in the above-described first laying specification is maximum. In particular, at each of sensor heights 150 mm, 200 mm, and 250 mm which belong to 100 mm to 250 mm assumed as sensor heights, it is significant that the sensor output tends to become large in the first laying specification compared with the other laying specifications.

As described above, in the first laying specification, the sensor output tends to be larger than that in the fourth laying specification in which magnetic markers 10 are magnetically isolated from one another. On the other hand, in the second laying specification without alternate switching in magnetic polarities, the sensor output is minimum among the above-described four laying specifications. Also, in the third laying specifications in which magnetic markers 10 are arrayed without the gap although the magnetic polarities are switched, the sensor output is smaller than that in the fourth laying specification in which magnetic markers 10 are magnetically isolated from one another.

The inventors have considered that the sensor output is varied as described above because the magnetic fields of magnetic markers 10 adjacent to each other interfere with each other. Furthermore, as for the first and third laying specifications in which the magnetic polarities of magnetic markers 10 are alternately switched, the inventors have considered that the sensor output is varied due to a difference in arrangement pitch. In more detail, the inventors have considered that, when the arrangement pitch is 20 cm, the magnetic field acting on magnetic sensor 2 is intensified due to interference between the magnetic fields of magnetic markers 10 adj acent to each other to increase the sensor output. Furthermore, the inventors have considered that when the arrangement pitch is 10 cm, the magnetic field acting on magnetic sensor 2 is weakened due to interference between the magnetic fields of magnetic markers 10 adjacent to each other to decrease the sensor output.

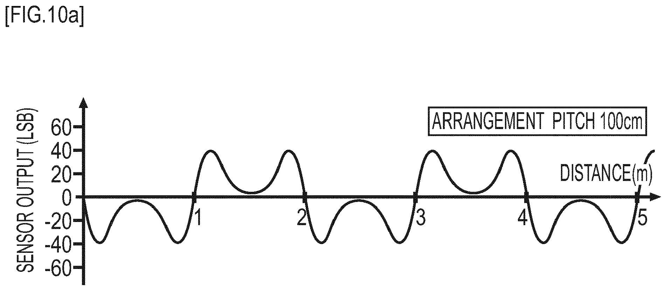

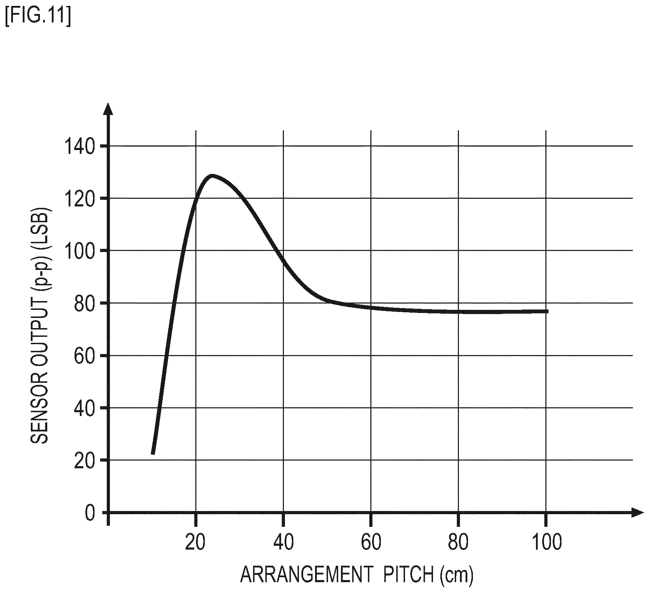

The inventors have conducted a simulation test regarding sensor outputs to investigate a relation between degree of mutual interference between the magnetic fields of magnetic markers 10 adjacent to each other and magnitude of sensor output. This simulation test is a simulation regarding sensor output when magnetic sensor 2 (with the sensor height of 200 mm) passes along a laying line where magnetic markers 10 are arrayed. Results of the simulation test are as in FIG. 10a to FIG. 10e and FIG. 11 described below.

In the simulation test, first, by using the above-described simulation program, the magnetic field distribution formed by magnetic markers 10 is calculated. FIG. 10a to FIG. 10e each depicts simulation result of the sensor output waveform predicted when magnetic sensor 2 moves along the above-described laying line in this magnetic field distribution when the sensor height=200 mm.

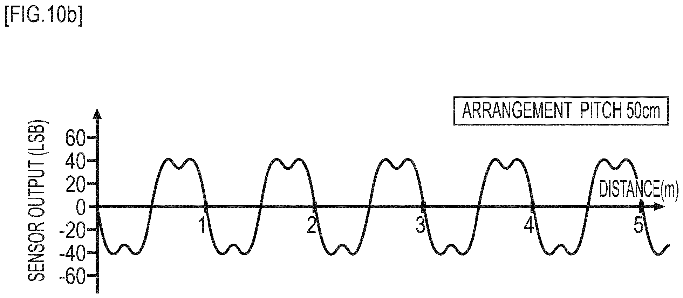

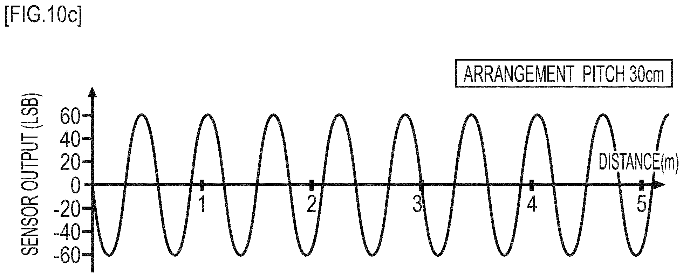

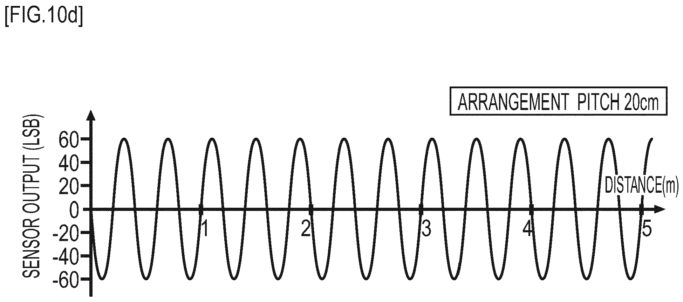

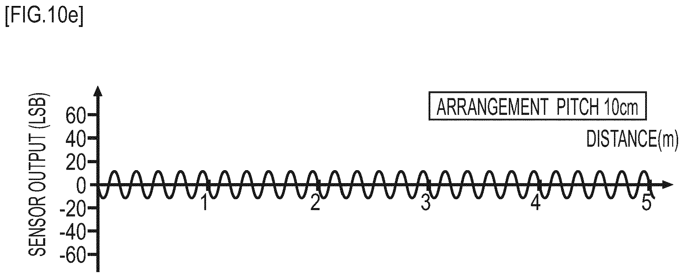

FIG. 10a to FIG. 10e each corresponds to the laying specification for magnetic markers 10 in which their magnetic polarities are alternately switched along the road. On the other hand, the arrangement pitch between magnetic markers 10 is varied for each of the drawings in FIG. 10a to 10e. The arrangement pitch is 100 cm in FIG. 10a, 50 cm in FIG. 10b, 30 cm in FIG. 10c, 20 cm in FIG. 10d, and 10 cm in FIG. 10e.

When the arrangement pitch is 100 cm in FIG. 10a, gap G between adjacent magnetic markers 10 is 90 cm. In this case, the state is almost such that each magnetic marker 10 is magnetically isolated, and it can be predicted that degree of interference between the magnetic fields of respective magnetic markers 10 become small as negligible. On the other hand, when the arrangement pitch is 10 cm in FIG. 10e, the state becomes such that magnetic markers 10 adjacent to each other are circumscribed, and it can be predicted that the degree of interference between the magnetic fields becomes the highest.

In the sensor output waveform when the arrangement pitch is 100 cm in FIG. 10a, interference between the magnetic fields of respective magnetic markers 10 hardly occurs, and each magnetic marker 10 is magnetically isolated. In this case, positive-negative ridges of the sensor output when magnetic sensor 2 with sensitivity in the forwarding direction of vehicle 5 passes over magnetic markers 10 individually appear for each magnetic marker 10. Of the positive-negative ridges configuring the sensor output waveform, the position of a zero-cross corresponds to the position directly above each magnetic marker 10.

On the other hand, in the sensor output waveform when the arrangement pitch is 10 cm in FIG. 10e, the appearing sensor output waveform is close to a sine wave. In this sensor output waveform, the positive-negative ridges of respective magnetic markers 10 interfere with each other and become indistinctive and integrated. Note that also in the sensor output waveform in FIG. 10e, the position of each zero-cross in the waveform corresponds to the position directly above each magnetic marker 10.

Among intermediate arrangement pitches in FIG. 10b to FIG. 10d, in the sensor output waveform in FIG. 10b when the arrangement pitch is 50 cm, interference occurs between the positive-negative ridges of magnetic markers 10 adjacent to each other, but the sensor output waveform is not a waveform of a sine wave. On the other hand, in FIG. 10c and FIG. 10d in which the arrangement pitches are 30 cm and 20 cm, respectively, as with the case in which the arrangement pitch is 10 cm, the sensor output waveform is a waveform close to a sine wave.

As described above, in magnetic markers 10 of the present embodiment, in a range in which the arrangement pitch is equal to or smaller than 30 cm, the magnetic fields of respective magnetic markers 10 mutually interfere with each other and become integrated, and the sensor output waveform is a waveform close to a sine wave. On the other hand, in a range in which the arrangement pitch is equal to or larger than 50 cm, mutual interference between the magnetic fields of respective magnetic markers 10 is insufficient, and the sensor output waveform is not an integrated waveform of a sine wave.

FIG. 11 depicts simulation results indicating a relation between the arrangement pitch between magnetic markers 10 (horizontal axis) and the magnitude of sensor output (p-p) (vertical axis). While the magnitude of sensor output (p-p) when the arrangement pitch is 50 cm is not much different from that when the arrangement pitch is 100 cm, as the arrangement pitch approaches 30 cm, the sensor output (p-p) gradually increases. Then, the sensor output (p-p) has a peak value when the arrangement pitch is 25 cm or so. When the arrangement pitch is shorter, the sensor output (p-p) again decreases. Then, when the arrangement pitch is shorter than 20 cm, the sensor output (p-p) is even smaller than those when the arrangement pitch is 50 cm or 100 cm. For example, the sensor output when the arrangement pitch is 10 cm is significantly small compared with the sensor output when the arrangement pitch is 50 cm or 100 cm.

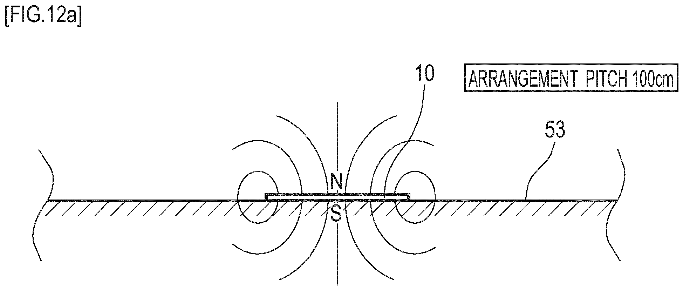

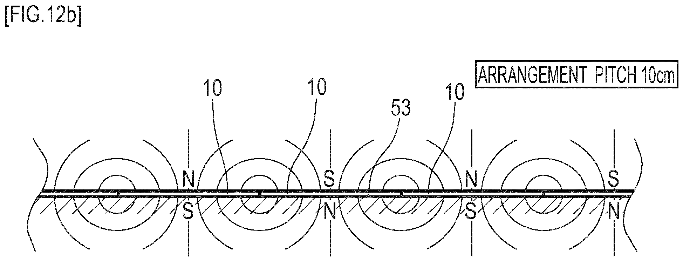

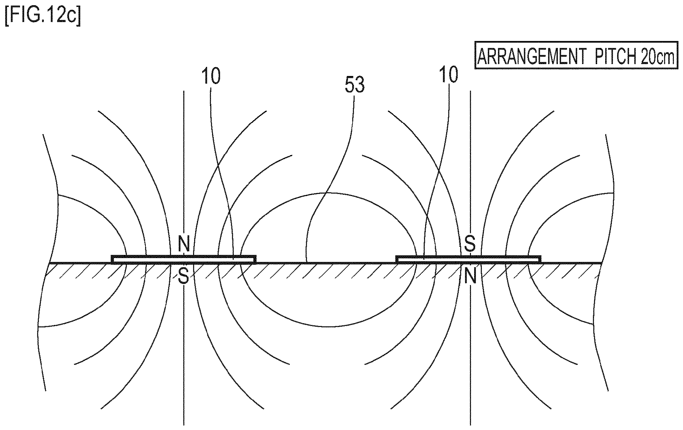

The inventors have considered the reason why this tendency of the sensor output occurs as follows. That is, the inventors have considered that size of a loop of a magnetic field formed around each magnetic marker 10 varies (FIG. 12a to FIG. 12c) in accordance with length of the arrangement pitch between magnetic markers 10, thereby causing the magnitude of the sensor output to be varied. Here, FIG. 12a to FIG. 12c are diagrams each schematically depicting magnetic fields formed on a periphery of magnetic markers 10. FIG. 12a corresponds to the arrangement pitch of 100 cm, FIG. 12b corresponds to the arrangement pitch of 10 cm, and FIG. 12c corresponds to the arrangement pitch of 20 cm.

The loop of the magnetic field when the arrangement pitch is 10 cm is smaller than the loop of the magnetic field when the arrangement pitch is 100 cm, as in FIG. 12a and FIG. 12b. Also, the loop of the magnetic field when the arrangement pitch is 20 cm is larger than the loop of the magnetic field when the arrangement pitch is 100 cm, as in FIG. 12a and FIG. 12c. The inventors have considered that with the loop of the magnetic field decreased when the arrangement pitch is 10 cm, the intensity of the magnetic field acting on magnetic sensor 2 positioned higher than road surface 53 is impaired to decrease the sensor output. Also, it has been considered that when the arrangement pitch is 20 cm, with the loop of the magnetic field increased, the magnetic field acting on magnetic sensor 2 positioned higher than road surface 53 is enhanced to increase the sensor output.

In the present embodiment, in view of the results of FIG. 10 and FIG. 11, as the arrangement pitch between magnetic markers 10, the arrangement pitch=20 cm is set, which satisfies the following three conditions.

(Condition 1) With reference to Hmax=250 mm, which is an upper-limit height of 100 mm to 250 mm assumed as the sensor height, the arrangement pitch is within a range of being equal to or larger than 2/3 Hmax and equal to or smaller than $3/2 \times$ Hmax.

(Condition 2) With reference to Hmax=250 mm, which is the upper-limit height of 100 mm to 250 mm assumed as the sensor height, the length of gap G between magnetic markers 10 adjacent to each other is within a range of being equal to or larger than $1/3 \times$ Hmax and equal to or smaller than $1 \times$ Hmax.

(Condition 3) The magnitude of the magnetic field with which magnetic markers 10 arrayed along the road including two magnetic markers 10 adjacent to each other act on the vehicle side exhibits a distribution of a sine waveform along the road. Here, the magnitude of the magnetic field acting on the vehicle side means a maximum value in the magnetic field distribution in a vehicle-width direction. Therefore, "exhibits a distribution of a sine waveform along the road" described above corresponds to the following: the sensor output waveform by magnetic sensor 2 passing directly above magnetic markers 1 arrayed along the road is a sine wave.

As for the above-described Condition 1, the arrangement pitch smaller than $2/3 \times$ Hmax=167 mm belongs to a left region of a peak value in the graph in FIG. 11, and magnetic markers 10 adjacent to each other are too close and there is a possibility of a decrease in sensor output. On the other hand, the arrangement pitch exceeding $3/2 \times$ Hmax=375 mm belongs to a right region of the graph in FIG. 11, and magnetic markers 10 adjacent to each other are too away and therefore there is a possibility of a decrease in sensor output.

Also, as for the above-described Condition 2, when the length of gap G between magnetic markers 10 adjacent to each other is smaller than $1/3 \times$ Hmax=83 mm, magnetic markers 10 adjacent to each other are too close and there is a possibility that the sensor output becomes even small. On the other hand, when the length of gap G between magnetic markers 10 adjacent to each other exceeds $1 \times$ Hmax=250 mm, magnetic markers 10 adjacent to each other are too away and therefore there is a possibility of a decrease in sensor output.

Furthermore, as for the above-described Condition 3, when the magnetic field distribution (distribution of magnitudes of magnetism) with which magnetic markers 10 arrayed along the road act on magnetic sensor 2 is diverged from a sine waveform, there is a possibility that magnetic markers 10 arrayed along the road are each magnetically isolated. In this state in which each magnetic marker 10 is isolated, the degree of interference between the magnetic fields of two magnetic markers 10 adjacent to each other is not sufficient, and there is a possibility that the sensor output becomes small, as in the right region of the graph in FIG. 11.

As described above, in magnetic marker system 1, the arrangement pitch between magnetic markers 10 (refer to FIG. 7) is appropriately set so that the magnetic fields of two magnetic markers 10 adjacent to each other and having different magnetic polarities mutually interfere with each other. In this magnetic marker system 1, by mutual interference between the magnetic fields of magnetic markers 10 adjacent to each other, the size of the loop of the magnetic field is expanded more than the case of a single magnetic marker 10, and the magnetic field acting on magnetic sensor 2 at the position higher than road surface 53 is intensified.

According to magnetic marker system 1 of the present embodiment, while reducing magnetic force (for example, magnetic flux density of the surface or the like) of magnetic marker 10 itself, the intensity of the magnetic field acting on magnetic sensor 2 attached to vehicle 5 can be improved. This magnetic marker system 1 is a system having excellent characteristics capable of detecting magnetic marker 10 on the vehicle 5 side with high reliability while reducing the magnetic force of magnetic marker 10.

Note that while a sheet-shape one is exemplarily described as magnetic marker 10 in the present embodiment, a shape specification of magnetic marker 10 is not limited to the sheet shape. For example, a columnar magnetic marker having, for example, the diameter of 20 mm and the height of 28 mm, may be used. Also, an upper-surface shape of the magnetic marker is not limited to a circular shape, but a triangular shape, a rectangular shape, a polygonal shape more than a pentagon, or the like may be adopted. Furthermore, the upper-surface shape of the magnetic marker may preferably be a point-symmetric shape with respect to a center or barycenter or a shape close to be point-symmetric. The upper-surface shape of the magnetic marker may be a shape having its outer perimeter formed at least partially with a curve, and may be a shape exhibiting an outer-peripheral shape smoothly configured only of a curve without a corner part.

Also, while one using the ferrite rubber magnet is exemplarily described as magnetic marker 10 in the present embodiment, a type of magnet is not limited to the present embodiment. The magnet may be a ferrite plastic magnet or a magnet made of neodymium or the like. Furthermore, while magnetic marker 10 without an accommodation case is exemplarily described in the present embodiment, a magnetic marker with a magnet accommodated in an accommodation case may be used. For example, a magnet made of neodymium or the like whose anti-corrosiveness is insufficient is required to be accommodated in the accommodation case with high airtightness or fluid-tightness.

Note in the present embodiment that three types of conditions, the above-described Condition 1 to Condition 3, are exemplarily described as conditions for selectively determining the arrangement pitch between magnetic markers 10 and the arrangement pitch satisfying all of Condition 1 to Condition 3 is set. Either one or two of the three types of conditions may be adopted. The condition to be adopted may be any of Condition 1 to Condition 3. However, as for Condition 3, there is a possibility that the lower limit of the arrangement pitch is not defined only with this condition. Thus, for example, a condition is preferably combined, such as the condition in which gap G (G>0) can be ensured between magnetic markers 10 adjacent to each other.

In the present embodiment, as conditions for selecting the arrangement pitch, the above-described Condition 1 indicating that the arrangement pitch is within the range of being equal to or larger than 2/3 Hmax and equal to or smaller than 3/2× Hmax, the above-described Condition 2 indicating that the length of gap G between magnetic markers 10 adjacent to each other is within the range of being equal to or larger than 1/3× Hmax and equal to or smaller than 1× Hmax, and so forth are exemplarily described. As a condition regarding the arrangement pitch, in place of the above-described Condition 1, a condition may be set in which the arrangement pitch has a length corresponding to a length smaller than a double of the attachment height of magnetic sensor 2. If the arrangement pitch is equal to or larger than the double of the attachment height, the degree of interference between the magnetic fields of magnetic markers 10 adjacent to each other is small, and there is a possibility that the effect of intensifying the magnetic field acting on magnetic sensor 2 is not sufficiently exerted.

Also, in the present embodiment, as the condition regarding gap G between magnetic markers 10 adjacent to each other, the above-described Condition 2 is exemplarily described in which the length of gap G is within the range of being equal to or larger than 1/3× Hmax and equal to or smaller than 1× Hmax. As the attachment height as a reference, in place of Hmax, which the an upper-limit height of 100 mm to 250 mm assumed as the sensor height, an intermediate attachment height may be set. Furthermore, an attachment height of magnetic sensor 2 in a general type of vehicles produced in the greatest numbers may be set as the attachment height as a reference.

An RF-ID tag may be attached to at least a part of magnetic markers 10 arrayed along the road. The RF-ID tag can be used as an information providing part which provides information for identifying magnetic marker 10. A vehicle including a tag reader unit communicable with the RF-ID tag can obtain information wirelessly transmitted by the RF-ID tag. This information may be identification information of the RF-ID tag. For example, a database storing position information of magnetic markers 10 linked to this identification information may be provided in a server device accessible from vehicle 5 via wireless communication, or in vehicle 5. In this case, when magnetic marker 10 is detected, by using the identification information received from the RF-ID tag, the position of magnetic marker 10 can be identified. As transmission information of the RF-ID tag, the position information of corresponding magnetic marker 10 itself may be used.

When the configuration is adopted in which the RF-ID tag is attached to a part of magnetic markers 10 to allow a position of corresponding magnetic marker 10 to be identified as described above, with reference to magnetic marker 10 with its position identified, the number of times of passing over magnetic markers 10 (the number of times of detection) may be counted. If the arrangement pitch between magnetic markers 10 is defined, the number of times of passing over magnet markers 10 is multiplied by the arrangement pitch, distance travelled with reference to the identified position can be calculated with high accuracy.

While magnetic sensor 2 having sensitivity in the longitudinal direction (forwarding direction) of vehicle 5 is exemplarily described in the present embodiment, a magnetic sensor having sensitivity in the vehicle-width direction may be used, or a magnetic sensor having sensitivity in the vertical direction may be used. Furthermore, for example, a magnetic sensor having sensitivity in two axial directions of the vehicle-width direction and the forwarding direction or two axial direction of the forwarding direction and the vertical direction may be adopted. For example, a magnetic sensor having sensitivity in three axial directions of the vehicle-width direction, the forwarding direction, and the vertical direction may be adopted. With the use of a magnetic sensor having sensitivity in a plurality of axial directions, the magnitude of magnetism and the acting direction of magnetism can be measured, and a magnetic vector can be generated. By using a difference between magnetic vectors and a change ratio of the difference in the forwarding direction, accuracy of detection of magnetic marker 10 may be improved.

(Second Embodiment)

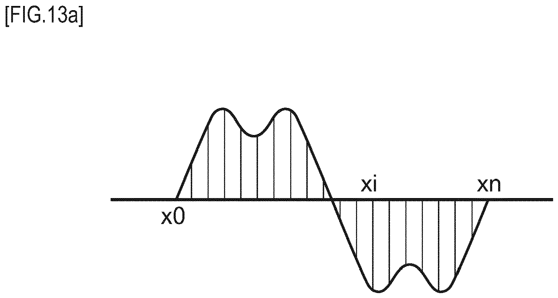

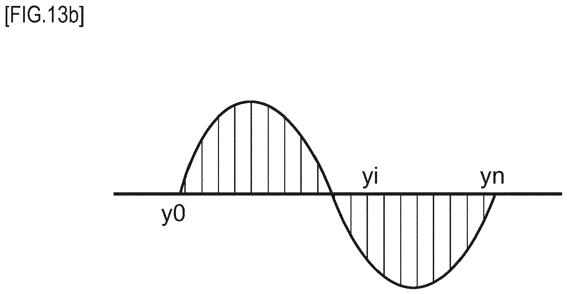

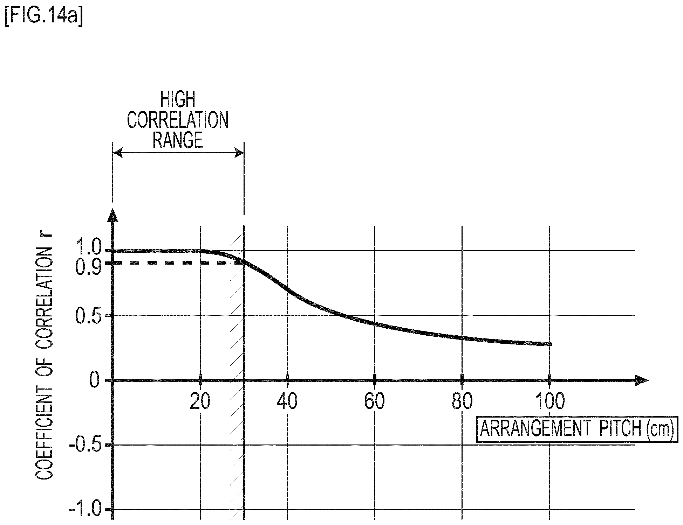

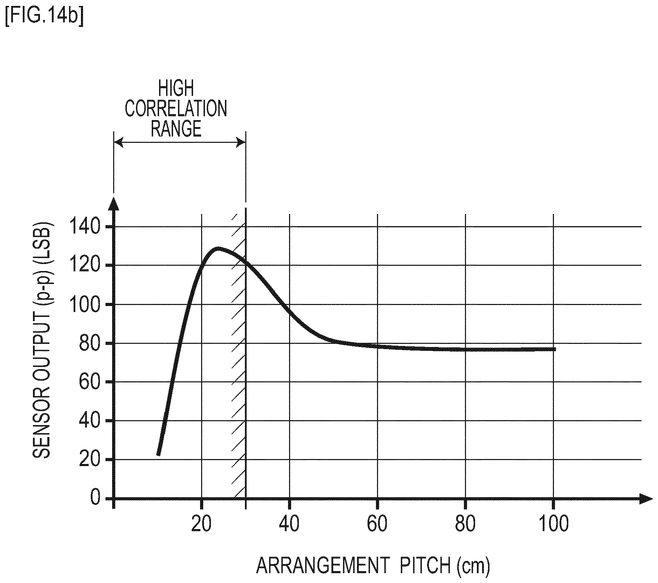

The present embodiment is an example based on magnetic marker system 1 of the first embodiment, with changes in conditions for determining the arrangement pitch between magnetic markers 10. Details of this are described with reference to FIG. 13 and FIG. 14.

In the magnetic marker system of the present embodiment, to selectively set the arrangement pitch, an index value indicating a degree of similarity between a sensor output waveform and a sine wave is used. As the index value, for example, a coefficient of correlation between the sensor output waveform and a sine wave, an error amount between the sensor output waveform and a sine wave, and so forth can be used.

For example, as a coefficient of correlation, a coefficient of correlation between data series xi (the number of pieces of data is n), which is sampling data of a sensor output waveform for one cycle in FIG. 13a, and data series yi (the number of pieces of data is n), which is sampling data of a sine wave for one cycle in FIG. 13b, can be used. Here, the sine wave of FIG. 13b has its phase and cycle matched with the sensor output waveform in FIG. 13a as a target for investigating the correlation, and there is a match regarding the interval and position of a zero-cross . Note that FIG. 13a exemplarily depicts the sensor output waveform when the arrangement pitch=50 cm.

Coefficient of correlation r between data series xi of the sensor output waveform in FIG. 13a and data series yi of the sine wave of FIG. 13b can be calculated by, for example, the following equation. Here, Sxy is a covariance between data series xi and data series yi, Sx is a standard deviation of data series xi, and Sy is a standard deviation of data series yi. xav is an average value of data series xi, and yav is an average value of data series yi.

[Equation 1]

$$r = \frac{Sxy}{Sx \times Sy}$$

Where,

$$Sxy = \frac{1}{n} \sum_{i=1}^{n} (xi - xav)(yi - yav)$$

$$Sx = \sqrt{\frac{1}{n}\sum_{i=1}^{n}(xi-xav)^2}$$

$$Sy = \sqrt{\frac{1}{n}\sum_{i=1}^{n}(yi-yav)^2}$$

If the sensor output waveform is a perfect sine wave, the above-described coefficient of correlation r is 1. When the difference between the sensor output waveform and a sine wave increases, coefficient of correlation r gradually decreases. As in FIG. 14a and FIG. 14b, when the difference between the sensor output waveform and a sine wave is large and coefficient of correlation r is small, the magnetic field acting on magnetic sensor 2 is weak, and the sensor output tends to decrease. Also, even if the sensor output waveform is close to the waveform of a sine wave and coefficient of correlation r is approximately 1, if the arrangement pitch is too short, the sensor output is small. Thus, in a range of arrangement pitches achieving coefficient of correlation r of being equal to or larger than a threshold value such as 0.8 (a high correlation range depicted in Fig. 14), the longest arrangement pitch may be set as the arrangement pitch when magnetic markers 10 are laid. For example, it may be determined that the sensor output waveform exhibits a sine wave when coefficient of correlation r is equal to or larger than a threshold value such as 0.8. Here, the sensor output waveform corresponds to a distribution of intensities of magnetic fields (magnitudes of magnetism) acting on the magnetic sensor.

Note that it may be determined that the sensor output waveform exhibits a sine wave when, for example, 0.9 is set as the threshold value regarding the above-described coefficient of correlation r and coefficient of correlation r is equal to or larger than the threshold value. In this case, compared with the case in which the threshold value is, for example, 0.8, degree of matching between the sensor output waveform and the sine wave can be more strictly determined. Furthermore, for the purpose of eliminating, in advance, setting of the arrangement pitch which is too short while coefficient of correlation r is approximately 1, thereby decreasing the sensor output, for example, a range of being equal to or larger than 0.8 and smaller than 0.9, a range of being equal to or larger than 0.9 and smaller than 0.95, or the like may be set as a range of coefficient of correlation r. By setting the threshold value smaller than 1 as an upper limit of coefficient of correlation r, a narrow arrangement pitch which causes a decrease in sensor output can be eliminated in advance.

Note that the sensor output waveform required to calculate coefficient of correlation r can be calculated by a simulation calculation. Alternatively, a test section where, for example, ten magnetic markers 10 or so are arrayed may be provided, and data series xi of the sensor output waveform may be obtained by actual measurements by magnetic sensor 2 in this test section. Data values of a sine wave can be obtained by calculation or the like.

In the present embodiment, as the index value indicating the degree of similarity between the sensor output waveform and a sine wave, coefficient of correlation r between the sensor output waveform and the sine wave is exemplarily described. As this index value, for example, an error amount may be adopted, such as a sum total of minimum square errors between the sensor output waveform and a normalized sine wave. As this error amount is smaller, the similarity between the sensor output waveform and the sine wave is higher. When this error amount is subjected to a threshold process and the error amount is smaller than a preset threshold, it is preferably determined that the sensor output waveform exhibits a sine-wave waveform.

Note that, for example, when a sensor output waveform of the magnetic sensor with its attachment height of 20 cm and a sensor output waveform of another with its attachment height of 10 cm are compared, the sensor output waveform in the case of 20 cm may become a smoother waveform close to a sine waveform. This is because a gap between the magnetic marker and the magnetic sensor is appropriate in the case of 20 cm. Thus, as for the threshold process for determining whether the sensor output waveform is close to a sine waveform, determination conditions for the threshold process may be changed in accordance with the attachment height of the magnetic sensor. For example, when the attachment height of the magnetic sensor is low, the determination conditions for the above-described threshold process are preferably mitigated, compared with the case in which this attachment height is high.

Note that other configurations and operations and effects are similar to those of the first embodiment.

In the foregoing, specific examples of the present invention are described in detail as in the embodiment, these specific examples merely disclose examples of technology included in the scope of the claims. Needless to say, the scope of the claims should not be restrictively construed based on the configuration, numerical values, and so forth of the specific examples. The scope of the claims includes technologies acquired by variously modifying, changing, or combining as appropriate the above-described specific examples by using known technologies, knowledge of a person skilled in the art, and so forth.

REFERENCE SIGNS LIST

| | |
|---|---|
| 1 | magnetic marker system |
| 10 | magnetic marker |
| 11 | magnet sheet |
| 2 | magnetic sensor |
| 21 | MI element |
| 211 | amorphous wire (magneto-sensitive body) |
| 213 | pick-up coil |
| 23 | pulse circuit |
| 231 | pulse generator |
| 5 | vehicle |
| 53 | road surface |
| 530 | lane |

**Claims**

1. A magnetic marker system (1) for achieving assists for vehicle (5) driving operation by a driver or vehicle (5) control for automatic driving independent from driver's operation, the system (1) comprising magnetic markers (10) laid along a road so as to be detectable by a magnetic sensor (2) on a vehicle (5) side, wherein

   the magnetic markers (10) are laid so that orientations of magnetic poles are alternately reversed along the road **characterized in that** and an arrangement pitch between the magnetic markers (10) is set so that a size of a loop of a magnetic field is expanded more than a case of a single magnetic marker (10) and the magnetic field acting on the magnetic sensor (2) on such vehicle side (5) is intensified more than the case of the single magnetic marker (10) by interference between magnetic fields of the magnetic markers (10) adjacent to each other as being spaced with a gap along the road.

2. The magnetic marker system (1) in claim 1, wherein magnitude of magnetism with which two of the magnetic markers (10) adjacent to each other along the road act on the vehicle (5) side exhibits a distribution of a sine waveform along the road.

3. The magnetic marker system (1) in claim 1 or 2, wherein the arrangement pitch, which is a gap between the magnetic markers (10) laid along the road, is a length corresponding to a length smaller than a double of an attachment height of the magnetic sensor (2) assumed on the vehicle (5) side.

4. The magnetic marker system (1) in any one of claims 1 to 3, wherein a length of the gap between two of the magnetic markers (10) adjacent to each other along the road is equal to or larger than 1/3 times and smaller than one time of an attachment height of the magnetic sensor (2) assumed on the vehicle (5) side.

5. The magnetic marker system (1) in any one of claims 1 to 4, wherein at least a magnetic marker (10), which is a part of the magnetic markers (10) laid along the road, is provided with an information providing part which provides information for identifying the magnetic marker (10).

6. The magnetic marker system (1) in claim 1, wherein the magnetic sensor (2) has its sensitivity in a forwarding direction of the vehicle (5) and can measure a component of a magnetic field acting in this direction

**Patentansprüche**

1. Magnetmarkierungssystem (1) zum Erzielen von Assistenten für eine Fahrzeug (5)-Fahren-Betätigung durch einen Fahrer oder eine Fahrzeug (5)-Steuerung zum automatischen Fahren unabhängig von einer Betätigung eines Fahrers, wobei das System (1) Magnetmarkierungen (10) aufweist, welche entlang einer Straße verlegt sind, um mittels eines Magnetsensors (2) auf einer Fahrzeug (5)-Seite detektierbar zu sein, wobei

die Magnetmarkierungen (10) so verlegt sind, dass Ausrichtungen von Magnetpolen entlang der Straße abwechselnd umgekehrt sind, **dadurch gekennzeichnet, dass**

ein Anordnungsabstand zwischen den Magnetmarkierungen (10) so eingestellt ist, dass eine Größe einer Schleife eines Magnetfeldes mehr als in einem Fall einer einzelnen Magnetmarkierung (10) erweitert ist und das Magnetfeld, das auf den Magnetsensor (2) auf einer solchen Fahrzeugseite (5) wirkt, mehr als im Fall der einzelnen Magnetmarkierung (10) verstärkt ist durch Interferenz zwischen Magnetfeldern der Magnetmarkierungen (10), die angrenzend aneinander sind, wenn sie mit einer Lücke entlang der Straße im Abstand angeordnet sind.

2. Magnetmarkierungssystem (1) gemäß Anspruch 1, wobei eine Größe des Magnetismus, mit dem zwei der Magnetmarkierungen (10), die entlang der Straße angrenzend aneinander sind, auf die Fahrzeug (5)-Seite wirken, eine Verteilung einer Sinuswellenform entlang der Straße aufweist.

3. Magnetmarkierungssystem (1) gemäß Anspruch 1 oder 2, wobei der Anordnungsabstand, der eine Lücke zwischen den entlang der Straße verlegten Magnetmarkierungen (10) ist, eine Länge ist, die mit einer Länge korrespondiert, die kleiner ist als ein Doppeltes einer Anbringungshöhe des Magnetsensors (2), welche auf der Fahrzeug (5)-Seite angenommen wird.

4. Magnetmarkierungssystem (1) gemäß irgendeinem der Ansprüche 1 bis 3, wobei eine Länge der Lücke zwischen zwei der Magnetmarkierungen (10), die entlang der Straße angrenzend aneinander sind, gleich oder größer als 1/3-mal und kleiner als einmal einer Anbringungshöhe des Magnetsensors (2) ist, welche auf der Fahrzeug (5)-Seite angenommen wird.

5. Magnetmarkierungssystem (1) gemäß irgendeinem der Ansprüche 1 bis 4, wobei mindestens eine Magnetmarkierung (10), die ein Teil der entlang der Straße verlegten Magnetmarkierungen (10) ist, mit einem Informationsbereitstellungsteil versehen ist, der Informationen zum Identifizieren der Magnetmarkierung (10) bereitstellt.

6. Magnetmarkierungssystem (1) gemäß Anspruch 1, wobei der Magnetsensor (2) seine Empfindlichkeit in einer Vorwärtsrichtung des Fahrzeugs (5) hat und eine Komponente eines in dieser Richtung wirkenden Magnetfeldes messen kann.

## Revendications

1. Système de marqueur magnétique (1) pour obtenir de l'assistance pour une opération de conduite d'un véhicule (5) par un contrôle conducteur ou véhicule (5) pour une conduite automatique indépendante de l'opération du conducteur, le système (1) comprenant des marqueurs magnétiques (10) posés le long d'une route de manière à être détectables par un capteur magnétique (2) sur un côté de véhicule (5), dans lequel

les marqueurs magnétiques (10) sont posés de manière à ce que des orientations de pôles magnétiques soient inversées en alternance le long de la route,
**caractérisé en ce qu'**un pas d'agencement entre les marqueurs magnétiques (10) est défini de manière à ce qu'une taille d'une boucle d'un champ magnétique soit plus élargie que dans un cas d'un seul marqueur magnétique (10) et que le champ magnétique agissant sur le capteur magnétique (2) sur un tel côté de véhicule (5) soit plus intensifié que dans le cas du seul marqueur magnétique (10) par l'interférence entre des champs magnétiques des marqueurs magnétiques (10) adjacents les uns aux autres étant espacés d'un espace le long de la route.

2. Système de marqueur magnétique (1) selon la revendication 1, dans lequel la magnitude de magnétisme avec lequel deux des marqueurs magnétiques (10) adjacents l'un à l'autre le long de la route agissent sur le côté de véhicule (5) présente une distribution d'une forme d'onde sinusoïdale le long de la route.

3. Système de marqueur magnétique (1) selon la revendication 1 ou 2, dans lequel le pas d'agencement, qui est un espace entre les marqueurs magnétiques (10) posés le long de la route, est une longueur correspondant à une longueur inférieure à un double d'une hauteur de fixation du capteur magnétique (2) supposée sur le côté de véhicule (5).

4. Système de marqueur magnétique (1) selon l'une quelconque des revendications 1 à 3, dans lequel une longueur de l'espace entre deux des marqueurs magnétiques (10) adjacents l'un à l'autre le long de la route est égale ou supérieure à 1/3 fois et inférieure à une fois d'une hauteur de fixation du capteur magnétique (2) supposée sur le côté de véhicule (5).

5. Système de marqueur magnétique (1) selon l'une quelconque des revendications 1 à 4, dans lequel au moins un marqueur magnétique (10), qui est une partie des marqueurs magnétiques (10) posés le long de la route, est pourvu d'une partie de fourniture d'information qui fournit une information pour identifier le marqueur magnétique (10).

6. Système de marqueur magnétique (1) selon la revendication 1, dans lequel le capteur magnétique (2) a sa sensibilité dans une direction d'avancement du véhicule (5) et peut mesurer une composante d'un champ magnétique agissant dans cette direction.

[FIG.1]

[FIG.2]

[FIG.3]

[FIG.4]

[FIG.5]

[FIG.6]

[FIG.7]

(20cm)
ARRANGEMENT PITCH    ARRANGEMENT PITCH

1

10

10

S    N    S

(10cm)
GAP G    GAP G

[FIG.8]

FIRST LAYING SPECIFICATION

SECOND LAYING SPECIFICATION

THIRD LAYING SPECIFICATION

FOURTH LAYING SPECIFICATION

20cm

[FIG.9]

[FIG.10a]

[FIG.10b]

EP 3 862 988 B1

[FIG.10c]

25

[FIG.10d]

[FIG.10e]

[FIG.11]

[FIG.12a]

10

ARRANGEMENT PITCH 100cm

53

N
S

[FIG.12b]

ARRANGEMENT PITCH 10cm

[FIG.12c]

ARRANGEMENT PITCH 20cm

[FIG.13a]

[FIG.13b]

[FIG.14a]

[FIG.14b]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10019779 A1
- JP 2002260154 A
- US 3609678 A
- WO 2017187881 A1
- JP 2005202478 A